# FASCICULE DE BREVET EUROPEEN

(11) **EP 1 336 706 B1**
(45) Date de publication et mention de la délivrance du brevet: **26.04.2006**
(21) Numéro de dépôt: 03003039.9
(22) Date de dépôt: 12.02.2003
(51) Int. Cl.: E05B 53/00, E05B 17/00, F16C 1/26

(54) **Piéce de transmission de la force de manipulation dans un verrou de porte**
Übertragungsstück der Handhabungskraft in einem Türriegel
Transmission device of the handling force in a door latch

(30) Priorité: 18.02.2002 JP 2002040674
(43) Date de publication de la demande: 20.08.2003
(73) Titulaire: OHI SEISAKUSHO CO., LTD., Yokohama (JP); VALEO SECURITE HABITACLE S.A.S., 94042 Créteil Cédex (FR)
(72) Inventeur: Miyagawa, Masazumi, c/oK.K.Ohi Seisakusho Co.,Ltd., Yokohama (JP); Ohashi, Michio, c/oK.K. Ohi Seisakusho Co., Ltd., Yokohama (JP)
(74) Mandataire: Rosolen-Delarue, Katell

(56) Documents cités:
- WO-A-00/79143
- DE-A- 10 058 636
- DE-A- 19 728 967
- DE-A- 19 809 449
- US-A- 6 014 910
- PATENT ABSTRACTS OF JAPAN vol. 007, no. 157 (M-227), 9 juillet 1983 (1983-07-09) -& JP 58 065312 A (NISSAN JIDOSHA KK), 19 avril 1983 (1983-04-19)

## Description

Cette invention concerne un système pour la transmission de la force de manipulation dans un verrou de porte disposant d'un dispositif de manipulation, ledit système comprenant une pièce de transmission de la force de manipulation.

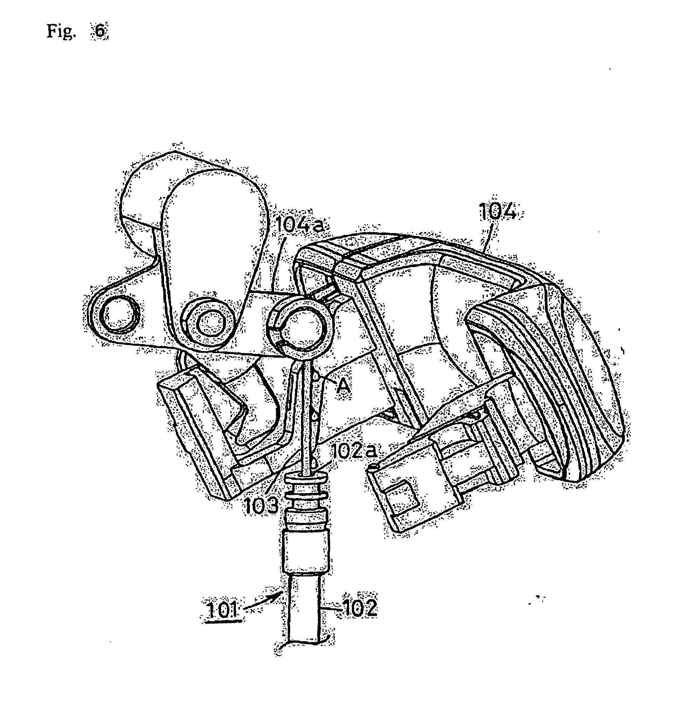

Comme indiqué à la fig. 6, la pièce de transmission 101 de la force de manipulation dans un verrou de porte classique comporte un tube de guidage 102 et un câble interne 103 inséré dans ce tube de guidage 102. Le bas du câble interne 103 est lié à un levier de manipulation du verrou de porte ne figurant pas installé dans la porte, et, le haut est lié à une partie mobile 104a d'un dispositif de manipulation 104 installé du côté du panneau extérieur de la porte. Lorsque le dispositif de manipulation 104 est manipulé, le câble interne est tiré vers le haut et le levier de manipulation du verrou de porte est entraîné pour prendre son action.

Dans le cas d'une telle pièce de transmission 101 de la force de manipulation, étant donné que le haut du tube de guidage 102 fixé du côté du dispositif de manipulation 104 est dénudé, l'eau de la pluie A s'écoule sur le dispositif de manipulation 104 et s'infiltre dans la porte, puis, s'écoule le long du câble interne 103, puis, entre dans l'orifice d'insertion 102a du tube de guidage 102, s'infiltre dans l'intérieur du verrou, et, entraîne un mauvais fonctionnement du verrou et celui de la pièce de transmission 101 de la force de manipulation. Il y a un tel risque.

On connaît également le document JP 58065312 qui divulgue, un système pour la transmission de la force de manipulation selon le préambule de la revendication 1, ledit système comprenant une pièce de transmission de force comportant un câble interne, disposé en partie dans une enveloppe extérieure, et un revêtement étanche fixé audit câble. Le revêtement étanche présente une longueur 1 supérieure à la distance 10 de débattement maximum du câble interne lors de son actionnement de sorte que le revêtement assure l'étanchéité de l'enveloppe extérieure.

En tenant compte des problèmes indiqués ci-dessus, cette invention a pour but de présenter un système pour la transmission de la force de manipulation du verrou de porte capable d'éviter l'infiltration de l'eau de la pluie dans le tube de guidage et d'assurer un stable et durable fonctionnement.

Les problèmes précités seront résolus selon cette invention par un système selon la revendication 1.

Selon cette invention, il est possible d'éviter sûrement l'infiltration de l'eau de la pluie dans le tube de guidage au moyen de ce couvercle et d'assurer un stable et durable fonctionnement.

Selon l'invention, par la mise du dessous du couvercle en contact avec le dessus du tube de guidage, le dessus de ce dernier est fermé. Avantageusement le dessous du couvercle est plus large que le dessus du tube de guidage.

Selon l'invention, l'eau de la pluie s'écoulant du haut du câble interne est guidée vers l'extérieur du tube de guidage. Et, de ce fait, il est possible d'éviter sûrement l'infiltration de l'eau de la pluie dans le tube de guidage.

Selon l'invention et de façon alternative, le dessus du tube de guidage est couvert par un capuchon élastique et le dessous du couvercle, est mis en contact avec le dessus du capuchon élastique de manière à fermer le dessus du capuchon élastique lors de la mise hors service du dispositif de manipulation, et, lorsque le dispositif de manipulation est mis en service, ledit couvercle se détache du dessus du capuchon élastique. Et, il est possible d'éviter sûrement l'infiltration de l'eau de la pluie dans le tube de guidage au moyen de ce couvercle et ce capuchon élastique et d'assurer un stable et durable fonctionnement.

Selon l'invention, par la mise du dessous du couvercle en contact avec le dessus du capuchon élastique, le dessus de ce dernier est fermé. Avantageusement, le dessous du couvercle est plus large que le dessus du capuchon élastique.

Selon l'invention , l'eau de la pluie s'écoulant du haut du câble interne est guidée vers l'extérieur du capuchon élastique. Et, de ce fait, il est possible d'éviter sûrement l'infiltration de l'eau de la pluie dans le tube de guidage.
La figure 1 représente une vue de face du verrou de porte comportant un système selon un premier exemple de cette invention.
La figure 2 représente également une vue de face de la partie haute de la pièce de transmission de la force de manipulation.
La figure 3 représente une vue de face de la partie haute de la pièce de transmission de la force de manipulation d'un 2^{ème} exemple de cette invention.
La figure 4 représente une vue de face de la partie haute de la pièce de transmission de la force de manipulation d'un 3^{ème} exemple de cette invention.
La figure 5 représente une vue de face de la partie haute de la pièce de transmission de la force de manipulation d'un 4^{ème} exemple de cette invention.
La figure 6 représente une perspective montrant un dispositif de manipulation et une pièce de transmission de la force de manipulation selon l'art classique.

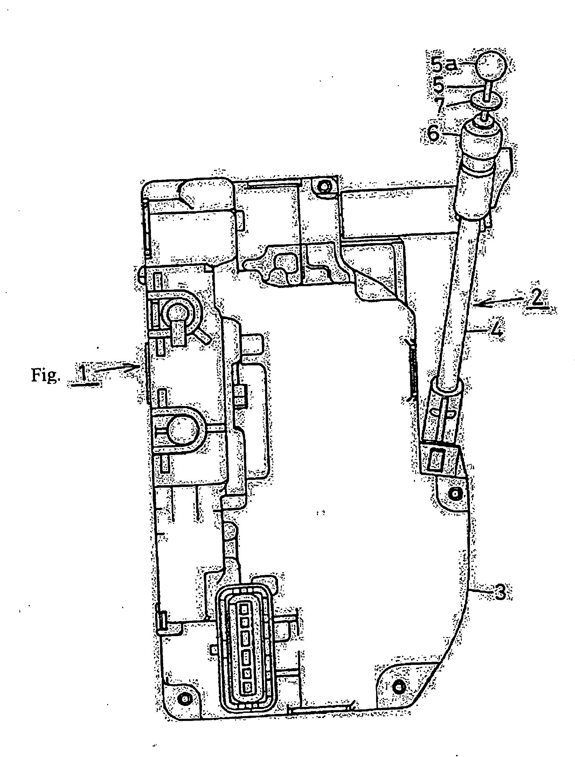

Ci-après, on explique un exemple de cette invention sur les fig. 1 et 2. Sur la fig. 1 est une vue de face d'un verrou de porte 1 et la fig. 2 est une vue de face d'une partie haute de la pièce de transmission 2 de la force de manipulation.
Le verrou de porte 1 est installé dans la porte d'une voiture. Et, une gâche de porte ne figurant pas, un engrenage amovible et de différents leviers ne figurant pas sont logés dans la cage 3 de ce verrou.

La pièce de transmission 2 de la force de manipulation est un câble de manipulation, en d'autres mots, elle comporte un tube de guidage 4 et un câble interne 5 inséré dans ce tube de guidage 4. Le bas de câble interne 5 entre dans la cage 3 et est lié à un levier externe parmi les différents leviers précités. Le bas du tube de guidage 4 est fixé de façon très étanche sur la cage 3 pour ne pas laisser infiltrer dans la cage 3 l'eau de la pluie s'écoulant sur la surface périphérique du tube de guidage 4.

Le dessus du tube de guidage 4 est fixé sur une partie réservée à la fixation ne figurant pas dans le dispositif de manipulation installé au panneau extérieur de porte et un embout sphérique 5a monté au haut du câble interne est connecté à une partie mobile du dispositif de manipulation comme dans le cas du dispositif classique. Par ailleurs, le dispositif de manipulation précité est installé au-dessus du verrou de porte 1.

La pièce de transmission 2 de la force de manipulation est installée dans un sens vertical dans la porte et un capuchon élastique 6 est posé sur le dessus du tube de guidage 4.

Un couvercle 7 métallique sous la forme du disque est monté en bas de l'embout 5a du câble interne 5 sortant du dessus du capuchon élastique 6. Ce couvercle 7 est plus large que le dessus du capuchon élastique 6. Lorsque le dispositif de manipulation est mis hors service, le dessous du couvercle est mis en contact avec le dessus du capuchon élastique 6 comme indiqué par une ligne pleine sur la fig. 2, et, lorsque le dispositif de manipulation est mis en service, il est tiré avec le câble interne 5 vers le haut et il se détache du dessus du capuchon élastique 6 comme indiqué par une ligne imaginaire sur la fig. 2.

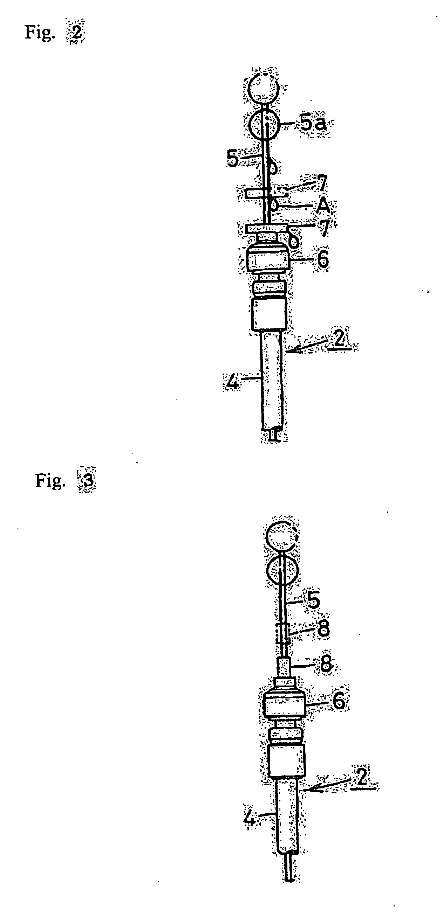

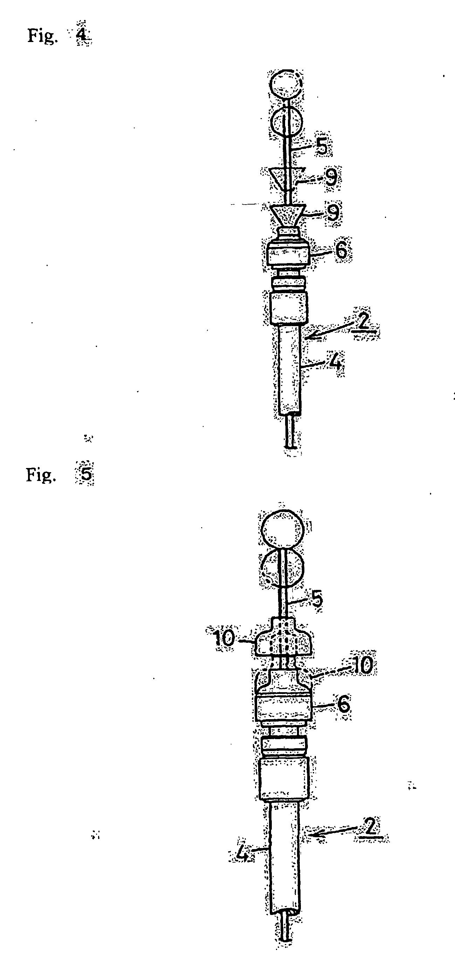

Lorsque le dispositif de manipulation est mis en service, le levier externe du verrou de porte 1 est entraîné par le câble interne 5 et la gâche de porte se libère ainsi de l'engrenage.
Comme expliqué en haut, lorsque le dispositif de manipulation est mis hors service, le couvercle 7 est mis en contact avec le dessus du capuchon élastique 6 et, de ce fait, le dessus du tube de guidage 4 est fermé. Et, l'eau de la pluie A s'écoulant le long du câble interne 5 et du dispositif de manipulation est stoppée par le dessus du couvercle. 7 et guidée vers la surface extérieure du capuchon élastique 6. Ainsi, l'infiltration de l'eau de la pluie dans le tube de guidage peut être évitée.
Egalement, le couvercle 7 est en métal et fixé solidement sur le câble interne 5. Et, par la mise du couvercle 7 en contact avec le dessus du capuchon élastique 6, la grandeur de déplacement du câble interne 5 vers le bas est limitée et il est facile de connecter le bas du câble interne 5 au levier externe du verrou de porte 1.
A propos du capuchon élastique 6, il n'est pas indispensable. En d'autres mots, il est possible d'omettre le capuchon élastique 6, de mettre directement le dessous du couvercle 7 en contact avec le dessus du tube de guidage 4, de fermer le dessus du tube de guidage 4 et d'éviter ainsi l'infiltration de l'eau de la pluie dans le tube de guidage 4. Dans ce cas, le dessous du couvercle 7 est conçu pour qu'il soit plus large que le dessus du tube de guidage 4. Et, l'eau de la pluie s'écoulant du haut du câble interne 5 est stoppée par le dessus du couvercle 7 et guidée vers l'extérieur du tube de guidage 4.
On vient d'expliquer un exemple de cette invention. Mais, il est possible de modifier cet exemple tant que l'on reste dans la portée des revendications annexées.
Par exemple, comme le second exemple indiqué à la fig. 3, le couvercle 8 peut être cylindrique. Et, il est possible de concevoir comme suit : lorsque le dispositif de manipulation est mis hors service, ce couvercle est mis en contact avec le dessus du capuchon élastique 6 comme indiqué par la ligne pleine et lorsque le dispositif de manipulation est mis en service, ce couvercle se détache du dessus du capuchon élastique 6 comme indiqué par la ligne imaginaire.
Comme le 3^{ème} exemple indiqué à la fig. 4, le couvercle 9 peut être sous la forme du tronc de cône de révolution inversé. Et, il est possible de concevoir comme suit : lorsque le dispositif de manipulation est mis hors service, ce couvercle est mis en contact avec le dessus du capuchon élastique 6 comme indiqué par la ligne pleine et lorsque le dispositif de manipulation est mis en service, ce couvercle se détache du dessus du capuchon élastique 6 comme indiqué par la ligne imaginaire.
Comme le 4^{ème} exemple indiqué à la fig. 5, le couvercle 10 peut être fait en matière élastique comme le caoutchouc sous la forme du parapluie. Et, il est possible de concevoir comme suit : lorsque le dispositif de manipulation est mis hors service, ce couvercle couvre la périphérie du capuchon élastique 6 comme indiqué par la ligne imaginaire et lorsque le dispositif de manipulation est mis en service, ce couvercle se détache du dessus du capuchon élastique 6 comme indiqué par la ligne pleine.
Dans le cas des exemples 2, 3 et 4, il est possible d'omettre le capuchon élastique 6. Egalement, le dispositif de manipulation peut être un cylindre à clé qui sera installé sur le panneau extérieur de la porte.
(1) Verrou de porte
(2) pièce de transmission de la force de manipulation
(3) Cage
(4) Tube de guidage
(5) Câble interne
(5a) Embout
(6) Capuchon élastique
(7) (8) (9) (10) Couvercle

## Revendications

1. Système pour la transmission de la force de manipulation dans un verrou de porte (1) disposant d'un dispositif de manipulation, ledit système comprenant une pièce de transmission (2) de la force de manipulation comportant un tube de guidage (4) et un câble interne (5) inséré dans ce tube de guidage (4), le bas de ce câble (5) étant apte à être lié au verrou (1) ou au dispositif de manipulation pour manipuler ledit verrou (1) et le haut de ce câble (5) étant apte à être lié à l'autre d'entre les deux, verrou (1) ou dispositif de manipulation, un couvercle (7, 8, 9, 10 du système étant monté sur le câble (5) qui sorte du dessus du tube de guidage (4), **caractérisé en ce que** le dessous du couvercle (7, 8, 9, 10) est mis en contact avec le dessus du tube de guidage (4) ou d'un capuchon élastique (6) couvrant le dessus du tube de guidage (4) de manière à fermer le dessus du tube de guidage (4) ou le dessus du capuchon élastique (6) lors de la mise hors service du dispositif de manipulation et lorsque le dispositif de manipulation est mis en service, ledit couvercle (7, 8, 9, 10) se détache du dessus du tube de guidage (4) ou du dessus du capuchon élastique (6).

2. Système selon la revendication 1, **caractérisé en ce que** le couvercle (7) est fixé au câble (5).

3. Système selon l'une quelconque des revendications précédentes, **caractérisé en ce que** le dessous du couvercle (7) est plus large que le dessus du capuchon élastique (6).

4. Système selon la revendication 1, **caractérisé en ce que** le couvercle (8) est de forme cylindrique.

5. Système selon la revendication 1, **caractérisé en ce que** le couvercle (9) est sous la forme d'un tronc de cône de révolution inversé.

6. Système selon la revendication 1, **caractérisé en ce que** le couvercle (10) se présente sous la forme d'un parapluie.

7. Système selon l'une quelconque des revendications 1 à 3, **caractérisé en ce que** le couvercle (7) se présente sous la forme d'un disque.

8. Système selon la revendication 6, **caractérisé en ce que** le couvercle (10) est en matière élastique.

9. Système selon la revendication 7, **caractérisé en ce que** le couvercle (7) est métallique.

## Patentansprüche

1. System zur Übertragung der Betätigungskraft auf ein an einer Betätigungseinrichtung angeordnetes Türschloß (1), wobei dieses System ein Zwischenglied (2) zur Übertragung der Betätigungskraft umfaßt, das aus einem Führungsrohr (4) und einem in dem Führungsrohr (4) befindlichen Innenkabel (5) besteht, wobei das untere Ende dieses Kabels (5) mit einem Schloß (1) oder mit einer Betätigungseinrichtung zur Betätigung des Schlosses (1) verbindbar ist und das obere Ende des Kabels (5) mit dem jeweils anderen der beiden Teile, dem Schloß (1) oder der Betätigungseinrichtung, verbindbar ist, und wobei ein Abdeckelement (7, 8, 9, 10) des Systems an dem Kabel (5) oberhalb des Führungsrohres (4) montiert ist, **dadurch gekennzeichnet, daß** die Unterseite des Abdeckelementes (7, 8, 9, 10) mit dem Oberteil des Führungsrohres (4) oder einer das Oberteil des Führungsrohres (4) bedeckenden elastischen Schutzkappe (6) verbindbar ist, derart, daß das Oberteil des Führungsrohres (4) oder der elastischen Schutzkappe (6) verschlossen ist, wenn die Betätigungseinrichtung nicht betätigt ist, und daß das Abdeckelement (7, 8, 9, 10) sich von dem Führungsrohr (4) oder der elastischen Schutzkappe 6 weg nach oben entfernt, wenn die Betätigungseinrichtung betätigt wird.

2. System nach Anspruch 1, **dadurch gekennzeichnet, daß** das Abdeckelement (7) an dem Kabel (5) befestigt ist.

3. System nach einem der vorhergehenden Ansprüche, **dadurch gekennzeichnet, daß** die Unterseite des Abdeckelementes (7) größer ist als das Oberteil der elastischen Schutzkappe (6).

4. System nach Anspruch 1, **dadurch gekennzeichnet, daß** das Abdeckelement (8) die Form eines Zylinders aufweist.

5. System nach Anspruch 1, **dadurch gekennzeichnet, daß** das Abdeckelement (9) die Form eines Kegelstumpfes aufweist.

6. System nach Anspruch 1, **dadurch gekennzeichnet, daß** das Abdeckelement (10) die Form eines Schirmes aufweist.

7. System nach einem der Ansprüche 1 bis 3, **dadurch gekennzeichnet, daß** das Abdeckelement (7) scheibenförmig ausgebildet ist.

8. System nach Anspruch 6, **dadurch gekennzeichnet, daß** das Abdeckelement (10) aus einem elastischen Material besteht.

9. System nach Anspruch 7, **dadurch gekennzeichnet, daß** das Abdeckelement (7) aus Metall besteht.

## Claims

1. System for transmission of the manipulation force in a door bolt (1) provided with a manipulation device, the said system comprising a manipulation force transmission part (2) comprising a guide tube (4) and an internal cable (5) inserted in this guide tube (4), the bottom of this cable (5) being connectable to the bolt (1) or to the manipulation device to manipulate the said bolt (1), and the top of this cable (5) being connectable to the other of the two manipulation device or the bolt (1), a cover (7, 8, 9, 10) of the system being mounted on the cable (5) that projects above the guide tube (4), **characterised in that** the bottom of the cover (7, 8, 9, 10) is brought into contact with the top of the guide tube (4) or an elastic cap (6) covering the top of the guide tube (4), so as to close the top of the guide tube, or the top of the elastic cap (6) when the manipulation device is taken out of service, and the said cover (7, 8, 9, 10) is detached from the top of the guide tube (4) or the top of the elastic cap (6) when the manipulation device is put into service.

2. System according to claim 1, **characterised in that** the cover (7) is fixed to the cable (5).

3. System according to any one of the previous claims, **characterised in that** the bottom of the cover (7) is wider than the top of the elastic cap (6).

4. System according to claim 1, **characterised in that** the cover (8) is cylindrical in shape.

5. System according to claim 1, **characterised in that** the cover (9) is shaped like an inverted truncated cone of revolution.

6. System according to claim 1, **characterised in that** the cover (10) is shaped like an umbrella.

7. System according to any one of claims 1 to 3, **characterised in that** the cover (7) is shaped like a disk.

8. System according to claim 6, **characterised in that** the cover (10) is made from an elastic material.

9. System according to claim 7, **characterised in that** the cover (7) is metallic.
